(19) Europäisches Patentamt
European Patent Office
Office européen des brevets

(11) **EP 0 872 520 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.$^7$: **C08L 51/04**, C08L 55/02, C08F 279/02

(21) Anmeldenummer: **98106020.5**

(22) Anmeldetag: **02.04.1998**

(54) **Emulsionsfrei hergestellte ABS-Formmassen mit sehr hoher Kerbschlagzähigkeit**

Emulsionfree produced ABS moldings with very high notch impact strength

ABS moulages avec une bonne résistance aux chocs qui sont produits sans émulsion

(84) Benannte Vertragsstaaten:
**BE DE ES FR GB IT NL**

(30) Priorität: **15.04.1997 DE 19715595**

(43) Veröffentlichungstag der Anmeldung:
**21.10.1998 Patentblatt 1998/43**

(73) Patentinhaber: **BAYER AG**
**51368 Leverkusen (DE)**

(72) Erfinder:
• **Eichenauer, Herbert, Dr.**
  **41539 Dormagen (DE)**
• **Krüger, Peter, Dr.**
  **51375 Leverkusen (DE)**
• **Leitz, Edgar, Dr.**
  **41541 Dormagen (DE)**
• **Michels, Gisbert, Dr.**
  **51061 Köln (DE)**
• **Ostarek, Ralph, Dr.**
  **Longmeadow, MA 01106 (US)**
• **Weider, Richard, Dr.**
  **Longmeadow, MA 01106 (US)**

(56) Entgegenhaltungen:
EP-A- 0 412 371          EP-A- 0 507 117
EP-A- 0 731 138          EP-A- 0 743 342
US-A- 3 928 494

## Beschreibung

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen mit hohen Anforderungen an die Zähigkeit bei Schlageinwirkung, insbesondere auch bei tiefen Temperaturen, wobei die sonstigen Eigenschaften wie z.B. E-Modul bzw. Oberflächenhärte und Wärmeformbeständigkeit nicht negativ beeinflußt werden sollen.

Die Einstellung derartiger Eigenschaftskombinationen konnte bisher nur annäherungsweise durch Verwendung spezieller durch Emulsionspolymerisation hergestellter Pfropfkautschuke erreicht werden, wobei jedoch hohe Zähigkeitswerte nur auf Kosten reduzierter E-Modul-Werte (Anhebung des Gesamtkautschukgehaltes der Formmassen) einstellbar waren.

Nachteile von durch Emulsionspolymerisation erzeugten ABS-Polymerisaten sind weiterhin die bei der Herstellung bzw. Aufarbeitung anfallende hohe Abwassermenge sowie die den so hergestellten Produkten durch den Gehalt an Polymerisationshilfsstoffen (z.B. Emulgatoren) eigene gelbliche Farbe im nichteingefärbten Zustand.

Es bestand daher die Aufgabe, Pfropfpolymerisat-Formmassen vom ABS-Typ (im folgenden abgekürzt als ABS-Formmassen) mit sehr hohen Zähigkeitswerten bereitzustellen, wobei die Herstellung nicht durch Emulsionspolymerisation erfolgen sollte.

Als erfindungsgemäße Lösung dieser Aufgabe wurde gefunden, daß ABS-Formmassen mit den geforderten Eigenschaften durch Kombination besonderer durch Lösungspolymerisation speziell hergestellter kautschukreicher feinteiliger ABS-Polymerisate mit speziellen grobteiligen Masse-, Lösungs- oder Suspensions-ABS-Polymerisaten erhalten werden können.

Kombinationen von durch Masse- oder Lösungspolymerisation hergestellten ABS-Polymerisaten mit unterschiedlichen Teilchengrößen sind bekannt.

So besehreibt z.B. die EP-A 412 801 unter anderem die direkte Herstellung bimodaler Masse-ABS-Polymerisate durch Polymerisieren von Kautschuk/Monomer-Lösungen in zwei Reaktoren, wobei Teilchengrößen von 0,05 bis 1,5 μm und 0,7 bis 10 μm resultieren; der Kautschukgehalt der ABS-Polmerharze liegt in der Praxis bei 7,4 Gew.-%. Hochzähe ABS-Produkte sind damit nicht einstellbar.

In der EP-A 507 117 werden ABS-Formmassen mit bimodaler Kautschukpartikelgrößenverteilung (100-500 nm und 600-10 000 nm) beschrieben.

Die Kautschukgehalte der verwendeten ABS-Polymerharze liegen bei 17 Gew.-%, womit bei einer maximalen Einsatzmenge in der Formmasse von 30 Gew.-% auch keine hochzähen ABS-Formmassen zugänglich sind.

Auch in der US-PS 5 286 792 sind bimodale Formmassen vom ABS-Typ beschrieben, wobei die Bimodalität in einem Verfahrensschritt eingestellt wird. Dadurch lassen sich die Komponenten mit großen bzw. kleinen Kautschukteilchengrößen nicht mehr gezielt abmischen; außerdem wird die Bimodalität erst durch die zusätzliche Verwendung eines zu möglichen Nachteilen (z.B. verminderte Wärmeformbeständigkeit) führenden Comonomeren ermöglicht.

Gegenstand der vorliegenden Erfindung sind Pfropfpolymerisat-Formmassen vom ABS-Typ enthaltend

A) 30 bis 80 Gew.-Teile, vorzugsweise 35 bis 75 Gew.-Teile und besonders bevorzugt 40 bis 70 Gew.-Teile mindestens eines durch Lösungspolymerisation hergestellten Pfropfpolymerisats mit einem Kautschukgehalt von 20 bis 50 Gew.-% , vorzugsweise von 22,5 bis 45 Gew.-% und besonders bevorzugt von 25 bis 40 Gew.-% und einem mittleren Teilchendurchmesser der Kautschukphase von 80 bis 600 nm, vorzugsweise von 150 bis 400 nm und besonders bevorzugt von 200 bis 350 nm,

B) 5 bis 50 Gew.-Teile, vorzugsweise 7,5 bis 45 Gew.-Teile und besonders bevorzugt 10 bis 40 Gew.-Teile mindestens eines durch Masse-, Lösungs- oder Suspensionspolymerisation hergestellten ABS-Polymerisats mit einem Kautschukgehalt von 3 bis 18 Gew.-%, vorzugsweise von 5 bis 16,5 Gew.-% und besonders bevorzugt von 7,5 bis 15 Gew.-% und einem mittleren Teilchendurchmesser der Kautschukphase von 700 bis 15 000 nm, vorzugsweise von 800 bis 10 000 nm und besonders bevorzugt von 1 000 bis 5 000 nm und

C) 5 bis 70 Gew.-Teile, vorzugsweise 7,5 bis 65 Gew.-Teile und besonders bevorzugt 10 bis 60 Gew.-Teile mindestens eines durch Masse-, Lösungs- oder Suspensionspolymerisation hergestellten kautschukfreien aus Vinylmonomereinheiten aufgebauten Thermoplastharzes.

Die Herstellung der ABS-Polymerisate B) ist bekannt. So können diese Polymerisate durch die Verfahren der Masse- oder Lösungspolymerisation oder Suspensionspolymerisation (vgl. z.B. DE-OS 3 100 785, US-PS 4 012 462, US-PS 4 362 850, EP-OS 67 536) hergestellt werden.

Vorzugsweise wird das Pfropfpolymerisat gemäß Komponente A) aus einem Monomerengemisch aus

D) 90 bis 20 Gew.-Teilen aromatischer Monoalkenylverbindung,

E) 10 bis 50 Gew.-Teilen ethylenisch ungesättigtes Nitril,

F) 0 bis 30 Gew.-Teilen weiterer copolymerisierbarer Verbindungen,

in Gegenwart von
15 bis 50 Gew.-Teilen pro 100 Gew.-Teile Monomere eines löslichen gelfreien Butadienpolymerisats oder Butadien/Styrol-Copolymerisats und in Gegenwart von
50 bis 200 Gew.-Teilen eines Lösungsmittels pro 100 Gew.-Teile Monomere D), E) und F) radikalisch polymerisiert, wobei das Lösungsmittel ein aliphatischer ($C_1$-$C_8$) oder cycloaliphatischer ($C_5$-$C_6$) Alkohol, Keton, Ether, Ester, Nitril (A1) oder ein Gemisch von (A1) mit einem aliphatischen ($C_4$-$C_{10}$) cycloaliphatischen oder aromatischen Kohlenwasserstoff (B2) im Gewichtsverhältnis A1:A2 von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so daß die isolierte thermoplastische Formmasse 20 bis 50 Gew.-% Butadienpolymerisat enthält.

Vorzugsweise beträgt der Gesamtkautschukgehalt der erfindungsgemäßen Formmassen 5 bis 30 Gew.-%, besonders bevorzugt 7,5 bis 25 Gew.-% und ganz besonders bevorzugt 10 bis 20 Gew.-%.

Weiterhin beträgt der über das ABS-Polymerisat A) eingebrachte Kautschukanteil vorzugsweise 50 bis 95 Gew.-%, besonders bevorzugt 55 bis 92,5 Gew.-% und ganz besonders bevorzugt 60 bis 90 Gew.-% (jeweils bezogen auf die Gesamtkautschukmenge der Formmasse).

Die Herstellung der ABS-Polymerisate A) erfolgt durch Lösungspolymerisation unter Verwendung von mindestens einem Lösungsmittel ausgewählt aus aliphatischem oder cycloaliphatischem $C_1$-$C_8$-Alkohol, Keton, Ether, Ester, Nitril bzw. einem Gemisch aus mindestens einem der genannten Lösungsmittel mit einem aliphatischen oder cycloaliphatischen $C_4$-$C_{10}$-Kohlenwasserstoff und/oder aromatischen Kohlerwasserstoff unter speziellen Randbedingungen.

Vorzugsweise beträgt dabei der Polymerengehalt der Gesamtmischung 30 bis 60 Gew.-%, insbesondere 35 bis 50 Gew.-%, der Gesamtgehalt an Lösungsmittel 25 bis 60 Gew.-% und der Rest sind nicht umgesetzte Monomere.

Bei der vorzugsweisen Herstellung der Komponente A) gelingt es bei Einsatz der Lösungsmittel oder -Gemische aus der Gruppe (A1) und gegebenenfalls der Gruppe (A2) in den angegebenen Gewichtsverhältnissen 1:0 bis 3:7 gelingt es, trotz hoher Kautschukgehalte eine Phaseninversion bei ausreichenden Umsätzen schnell zu durchlaufen, so daß eine feindisperse Phase aus Pfropfkautschuk entsteht.

Die Herstellung der Komponente A) kann diskontinuierlich, halbkontinuierlich und kontinuierlich durchgeführt werden. Bei der kontinuierlichen Ausführungsform kann man vorteilhaft die Lösung der Monomeren und des Kautschuks in den Lösungsmitteln in einen kontinuierlich beschickten, durchmischten und gerührten Tankreaktor bei einem stationären, nach der Phaseninversion liegenden Monomerumsatz in erster Stufe von über 10 Gew.-%, bezogen auf die Summe der Monomeren, polymerisieren und die radikalisch ausgelöste Polymerisation in mindestens einer weiteren Stufe bis zu einem Monomerenumsatz, bezogen auf die Summe der Monomeren von 30 bis 70 Gew.-% unter Durchmischen in einem oder mehreren weiter kontinuierlich betriebenen Rührkessel(n) in Kaskade oder in einem durchmischenden Pfropfenströmungsreaktor und/oder einer Kombination beider Reaktortypen fortführen, Restmonomere und Lösungsmittel nach herkömmlichen Techniken (z.B. auf Wärmeaustauschverdampfer, Entspannungsverdampfer, Strangverdampfer, Dünnfilm- oder Dünnschichtverdampfer, Schneckenverdampfer) entfernen, und in den Prozeß zurückfuhren. Vorteilhaft kann es auch sein, die kontinuierliche Polymerisation in drei Stufen durchzuführen, wobei die erste Stufe bei einem stationären, vor der Phaseninversion liegenden Monomerumsatz unter 10 Gew.-% und die weiteren Stufen bei den oben beschriebenen Umsätzen betrieben werden.

Die diskontinuierliche und halbkontinuierliche Polymerisation können in einem oder mehreren hintereinander geschalteten gefüllten oder teilgefüllten durchmischten Rührkesseln unter Vorlegen der Monomeren des Kautschuks und der Lösungsmittel und Polymerisation bis zum angegebenen Monomerumsatzz von 30 bis 70 Gew.-% durchgeführt werden.

Zur besseren Durchmischung und Zerteilung des eingespeisten Kautschuks kann der Polymersirup sowohl bei kontinuierlicher als auch diskontinuierlicher Fahrweise im Kreis über durchmischende und scherende Organe gepumpt werden. Solche "Loopoperationen" sind Stand der Technik und können bei der Einstellung der Teilchengröße des Kautschukes hilfreich sind. Vorteilhafter ist jedoch die Anordnung von Scherorganen zwischen zwei separaten Reaktoren, um Rückvermischung, die zu einer Verbreiterung der Teilchengrößenverteilung führt, zu vermeiden.

Die mittlere Verweilzeit beträgt 1 bis 10 Stunden. Die Polymerisation wird vorteilhaft bei 60 bis 120°C, vorzugsweise am Siedepunkt des Lösungsmittel/Polymer-Gemisches durchgeführt. Es ist vorteilhaft, die Polymerisation bei Normaldruck auszuführen, möglich ist aber auch die Polymerisation bei geringem Überdruck bis zu 6 bar.

Die Zähigkeiten der gerührten oder transportierten Medien bewegen sich im Bereich von maximal 150 Pa.s.

Das Pfropfpolymerisat kann in bekannter Weise durch Fällen in Lösungsmittel, durch Strippen mit Wasser und/oder Wasserdampf oder durch Eindampfen zur Polymerschmelze z.B. auf Enspannungsverdampfern, Strangverdampfern, Wendelrohrverdampfern, Dünnfilmverdampfern, gewissen Dünnschichtverdampfern, Fallfilmverdampfern, Schneckenverdampfern, isoliert werden.

Man kann auch in gerührten Mehrphasen-Verdampfern mit Knet- und Abstreifvorrichtungen Lösungsmittel und Restmonomere entfernen. Die Mitverwendung von Treibund Schleppmitteln, z.B. Wasserdampf, ist möglich, jedoch kann trotz der hohen Lösemittelmengen auch ohne Verwendung solcher Schleppmittel ein sehr niedriger Restmonomerengehalt mit einfachen Eindampfmethoden erreicht werden.

Lösungsmittel der Gruppe (A1) sind Alkohole wie Methanol, Ethanol, Propanol, Isopropanol, Butanol, Isobutanol, tert.-Butanol, Amylalkohol, Isoamylalkohol, Isooctanol, Cyclohexanol; Ketone wie Aceton, Methyl-ethylketon, Methyl-isopropylketon, Cyclopentanon, Cyclohexanon; Ether wie Tetrahydrofuran, Dioxan, Ethylenglykoldimethyl, -diethyl, -dipropyl, -diisopropylester; Ester wie Ethylacetat, Propylacetat, Butylacetat u.a., Nitrile wie Acetonitril, Propionitril, Butyronitril. Bevorzugt wird Methyl-ethylketon und Aceton.

Lösungsmittel der Gruppe (A2) sind aliphatische Kohlenwasserstoffe wie Butan, Pentan, Hexan, Heptan, Octan bzw. deren Iso-Derivate, cycloaliphatische Kohlenwasserstoffe wie Cyclopentan, Cyclohexan, Alkyl-cyclopentan, Alkyl-cyclohexan, aromatische Kohlenwasserstoffe wie Benzol, Toluol, Xylole, Ethylbenzol. Bevorzugt wird Toluol und Ethylbenzol.

Besonders bevorzugt sind Gemische aus Aceton und Ethylbenzol sowie aus Aceton und ToluoL

Man kann auch nur Lösungsmittel aus der Gruppe (A1) verwenden. Bevorzugt ist dann Methyl-ethylketon.

Zur Einstellung der Molmassen können übliche Molmassenregler wie Mercaptane und Olefine, z.B. tert.-Dodecylmercaptan, n-Dodecylmercaptan, Cyclohexen, Terpinolen, dimeres $\alpha$-Methylstyrol u.a. in Mengen von 0,05 bis 1,0 Gew.-%, bezogen auf copolymerisierende Monomeren eingesetzt werden.

Geeignete Initiatoren für die radikalische Polymerisation sind pfropfaktive, in Radikale zerfallende Peroxide wie Peroxycarbonate, Peroxydicarbonate, Diacylperoxide, Perketale oder Dialkylperoxide und/oder Azo-Verbindungen oder Mischungen hieraus. Beispiele sind Azodiisobuttersäuredinitril, Azoisobuttersäurealkylester, tert.-Butylperpivalat, -peroctoat, -perbenzoat, -perneodecanoat. Diese Initiatoren werden in Mengen von 0,01 bis 1 Gew.-%, bezogen auf Monomere I. bis 3., verwendet.

Während der Polymerisation oder vor der Aufarbeitung können übliche Zusatzmittel wie Farbstoffe, Antioxidantien, Gleitmittel, Stabilisatoren, wie dem Fachmann bekannt, zugesetzt werden.

Für die Herstellung der Komponente A) geeignete Kautschuke sind vorzugsweise lösliche, gelfreie Butadien-Polymerisate wie z.B. Polybutadiene sowie Styrolbutadien-Copolymere in statistischer und/oder Block-Form, mit hohem 1,2-Vinyl-Anteil von 2 bis 40 %, bevorzugt von 8 bis 25 %, bezogen auf die Doppelbindungen, mit Molmassen von 50.000 bis 500.000, einschließlich verzweigter und sternförmiger Polymerer mit Gelgehalten <1 000 ppm.

Aromatische Monoalkenyl-Verbindungen 1. sind bevorzugt Styrol, $\alpha$-Methylstyrol, kernsubstituierte Alkylstyrole, kernsubstituierte Chlorstyrole.

Ethylenisch ungesättigte Nitrile sind bevorzugt Acrylnitril, Methacrylnitril.

Copolymerisierbare Verbindungen sind z.B. Acrylester wie Methyl(meth)acrylat, Ethyl(meth)acrylat, tert.-Butyl (meth)acrylat, Ester der Fumar-, Itaconsäure, Maleinderivate wie Maleinsäureanhydrid, Maleinsäureester, N-substituierte Maleinimide wie vorteilhaft N-Cyclohexyl- oder N-Phenyl-Maleinimid, N-Alkyl-Phenyl-Maleinimid, weiter Acrylsäure, Methacrylsäure, Fumarsäure, Itaconsäure oder deren Amide.

Die erfindungsgemäß geeigneten ABS-Polymerisate A) weisen einen Kautschukgehalt von 20 bis 50 Gew.-%, vorzugsweise von 22,5 bis 45 Gew.-% und besonders bevorzugt von 25 bis 40 Gew.-% auf, die mittleren Teilchendurchmesser betragen 80 bis 600 nm, vorzugsweise 150 bis 400 nm und besonders bevorzugt 250 bis 350 nm.

Außerdem besitzen die ABS-Polymerisate (A) vorzugsweise einen Pfropfgrad von 0,2 bis 1 (vergleiche M. Hoffmann, H. Krömer, R. Kuhn in "Polymeranalytik I", Georg Thieme Verlag Stuttgart 1977) und einen Gelgehalt von 30 bis 50 Gew.-% (gemessen in Methylethylketon).

Die Herstellung der ABS-Polymerisate B) ist bekannt. So können diese Polymerisate durch die Verfahren der Masse- oder Lösungspolymerisation oder Suspensionspolymerisation (vgl. z.B. DE-OS 3 100 785, US-PS 4 012 462, US-PS 4 362 850, EP-OS 67 536) hergestellt werden.

Die erfindungsgemäß geeigneten ABS-Polymerisate B) weisen einen Kautschukgehalt von 3 bis 18 Gew.-%, vorzugsweise von 5 bis 16,5 Gew.-% und besonders bevorzugt von 7,5 bis 15 Gew.-% auf, die mittleren Teilchendurchmesser betragen 700 bis 15000 nm, vorzugsweise 800 bis 10 000 nm und besonders bevorzugt 1 000 bis 5 000 nm.

Als erfindungsgemäß geeignete kautschukfreie Thermoplastharze C) auf Basis von Vinylmonomeren werden vorzugsweise Homo-, Co- oder Terpolymerisate eingesetzt, die durch Polymerisation von Styrol, $\alpha$-Methylstyrol, Acrylnitril, Maleinsäureanhydrid, N-Phenylmaleinimid, Methylmethacrylat hergestellt werden. Beispiele für derartige Polymerisate sind Styrol/Acrylnitril-Copolymerisate, Styrol/Acrylnitril/Methylmethacrylat-Terpolymerisate, Styrol/Methylmethacrylat-Copolymerisate, Acrylnitril/Methylmethacrylat-Copolymerisate, $\alpha$-Methylstyrol/ Acrylnitril-Copolymerisate,

Styrol/α-Methylstyrol/Acrylnitril-Terpolymerisate, α-Methylstyrol/Methylmethacrylat/Acrylnitril-Terpolymerisate, Styrol/-α-Methylstyrol/Methylmethacrylat-Terpolymerisate, Styrol/Maleinsäureanhydrid-Copolymerisate, Styrol/Methylmethacrylat/Maleinsäureanhydrid-Terpolymerisate, Styrol/Acrylnitril/N-Phenylmaleinimid-Terpolymerisate, Styrol/N-Phenylmaleinimid-Copolymerisate, Polymethylmetacrylat.

Bevorzugte Thermoplastharze C) sind Styrol/Acrylnitril-Copolymerisate, α-Methylstyrol/Acrylnitril-Copolymerisate, Styrol/N-Phenylmaleinimid-Copolymerisate, und Styrol/Acrylnitril/N-Phenylmaleinimid-Terpolymerisate.

Derartige Polymerisate sind bekannt und lassen sich durch radikalische Polymerisation, insbesondere durch Masse-, Lösungs- oder Suspensionspolymerisation herstellen. Sie besitzen vorzugsweise mittlere Molekulargewichte $\overline{M}_w$ von 20 000 bis 200 000 bzw. Grenzviskositäten [η] von 20 bis 110 ml/g (gemessen in Dimethylformamid bei 25°C).

Die erfindungsgemäßen ABS-Formmassen können erhalten werden, indem man ihre Bestandteile A, B und C miteinander bei höherer Temperatur, insbesondere bei T = 100°C bis 280°C z.B. in Knetern, auf Walzenstühlen oder Schneckenmaschinen vermischt.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Gleitmittel, Antistatika, Entformungsmittel, Flammschutzmittel, Pigmente, Füll- oder Verstärkerstoffe (Glasfasern, Kohlefasern etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

**Beispiele**

In den folgenden Beispielen sind die angegebenen Teile immer Gewichtsteile und die angegebenen % immer Gewichtsprozente, wenn nicht anders angegeben.

Polymerkomponenten

ABS-Polymerisat A1

In einem 100l-Reaktor mit Ankerrührer (80 Upm) wird eine bei 40° bis 50°C unter Stickstoff hergestellte Lösung von 72 Gew.-Teilen eines Kautschuks (Poly-cis-butadien-co-block-styrol, 11 Gew.-% Styrol, Lösungsviskosität 27,5 mPa·s, 5% ige Lösung in Styrol) in 257 Gew.-Teilen Styrol, 120 Gew.-Teilen Acrylnitril und 229 Gew.-Teilen 2-Butanon zusammen mit 0,95 Gew.-Teilen tert.-Dodecylmercaptan, 0,15 Gew.-Teilen 2,5-Di-tert.-butylphenol und 7.6 Gew.-Teilen Paraffinöl vorgelegt. Nach dem Aufheizen auf 75°C wird eine Lösung von 0,57 Gew.-Teilen tert.-Butylperpivalat (60% ig in Kohlenwasserstoffgemisch) und 0,16 Gew.-Teilen tert.-Butylperoctoat in 18 Gew.-Teilen 2-Butanon zugesetzt und ca. 45 min bis zum Ende der Phaseninversion (erkennbar am Abfallen des Drehmoments) nachgerührt. Dann wird unter Nachdosierung von 0,19 Gew.-Teilen tert.-Dodecylmercaptan (gelöst in 37 Gew.-Teilen 2-Butanon) und unter Steigerung der Temperatur (1,5 h bei 84°C, 1 h bei 87°C, 4,5 h bei 90°C) bis zum Endumsatz polymerisiert, wonach 2 Gew.-Teile p-2,5-Di-tert.butylphenol-propionsäureoctylester (Irganox 1076, Ciba-Geigy) (gelöst in 11 Gew.-Teilen 2-Butanon) als Stabilisator zugegeben werden.

Der Feststoffgehalt des Polymerisationssirups nach Ende der Reaktion beträgt 39 Gew.-%. Die Lösung wird dann auf einer ZSK-Labor-Eindampfschnecke bis 250°C Endtemperatur eingedampft und granuliert. Das Granulat enthält 25 Gew.-% Kautschuk, der Gelgehalt (gemessen in Aceton) beträgt 33 Gew.-%, die mittlere Teilchengröße der Kautschukphase (Gewichtsmittelwert) beträgt ca. 250 nm.

ABS-Polymerisat B 1

Durch Suspensionspolymerisation hergestelltes ABS-Polymerisat mit einem Kautschukgehalt (Polybutadien) von 15 Gew.-%, einem Acrylnitrilgehalt der Styrol/Acrylnitril-Copolymerphase von 26 Gew.-%, einem Gelgehalt (gemessen in Aceton) von 26,5 Gew.-% und einer mittleren Teilchengröße der Kautschukphase (Gewichtsmittelwert) von ca. 1500 nm.

ABS-Polymerisat B 2

Durch Suspensionspolymerisation hergestelltes ABS-Polymerisat mit einem Kautschukgehalt (Polybutadien) von 13,5 Gew.-%, einem Acrylnitrilgehalt der Styrol/Acrylnitril-Copolymerphase von 26 Gew.-%, einem Gelgehalt (gemessen in Aceton) von 27 Gew.-% und einer mittleren Teilchengröße der Kautschukphase (Gewichtsmittelwert) von ca. 8000 nm.

ABS-Polymerisat V (Vergleichsmaterial)

Durch Emulsionspolymerisation hergestelltes ABS-Polymerisat mit einem Kautschukgehalt (Polybutadien) von 55 Gew.-%, einem Acrylnitrilgehalt der Styrol/Acrylnitril-Copolymerphase von 27 Gew.-%, einem Gelgehalt (gemessen in Aceton) von 89 Gew.-% und einer mittleren Teilchengröße der Kautschukphase (Gewichtsmittelwert) von ca. 450 nm.

Thermoplastharz C 1

Durch Lösungspolymerisation hergestelltes statistisches Styrol/Acrylnitril-Copolymerisat (Gew.-Verhältnis Styrol: Acrylnitril = 72 : 28) mit einem mittleren Molekulargewicht $\overline{M}_w$ von ca. 85 000 und $\overline{M}_w/\overline{M}_n$-1$\leq$2.

Formmassen

Die oben beschriebenen Polymerkomponenten werden in den in Tabelle 1 angegebenen Anteilen zusammen mit 1 Gew.-Teil Pentaerythrittetrastearat in einem Innenkneter vermischt und nach Granulierung durch Spritzgießen zu Prufstäben und zu einer ebenen Platte (zur Beurteilung der Oberfläche) verarbeitet.

**Folgende Daten werden ermittelt :**

Kerbschlagzähigkeit bei Raumtemperatur ($a_k^{RT}$) und bei -40°C ($a_k^{-40°C}$) nach ISO 180 1/A (Einheit: kJ/m$^2$),

Kugeldruckhärte $H_C$ nach DIN 53 456 (Einheit : N/mm$^2$),

Fließverhalten MVI nach DIN 53 753 U (Einheit cm$^3$/10 min) und

Glanzverhalten nach DIN 67530 bei einem Reflektionswinkel von 60° (Reflektometerwert).

Aus den Beispielen ist ersichtlich, daß die erfindungsgemäßen Formmassen zu ausgezeichneten Zähigkeiten sowohl bei Raumtemperatur als auch bei tiefer Temperatur führen, wobei gleichzeitig gute Werte für Härte und Fließfähigkeit erhalten werden. Der Oberflächenglanz läßt sich in weiten Bereichen variieren, wobei der Schwerpunkt bei der Herstellung von Formteilen mit matten Oberflächen liegt.

Tabelle 1:

| Zusammensetzungen der Formmassen Angaben in Gew.-Teile | | | | | | |
|---|---|---|---|---|---|---|
| Beispiele | A1 | B1 | B2 | V | C1 | Gesamtkautschukgehalt in der Formmasse (Gew.-%) |
| 1 | 43 | 8 | -- | -- | 49 | 12 |
| 2 | 38,5 | 16 | -- | -- | 45,5 | 12 |
| 3 | 33,5 | 24 | -- | -- | 42,5 | 12 |
| 4 | 43 | -- | 9 | -- | 48 | 12 |
| 5 | 38,5 | -- | 18,5 | -- | 43 | 12 |
| 6 (Vergleich) | 48 | -- | -- | -- | 52 | 12 |
| 7 (Vergleich) | -- | 80 | -- | -- | 20 | 12 |
| 8 (Vergleich) | -- | -- | 92 | -- | 8 | 12 |
| 9 (Vergleich) | -- | -- | -- | 22 | 78 | 12 |
| 10 | 65 | 12 | -- | -- | 23 | 18 |
| 11 | 57,5 | 24 | -- | -- | 18,5 | 18 |

Tabelle 1:   (fortgesetzt)

| Zusammensetzungen der Formmassen<br>Angaben in Gew.-Teile | | | | | | |
|---|---|---|---|---|---|---|
| Beispiele | A1 | B1 | B2 | V | C1 | Gesamtkautschukgehalt in der Formmasse (Gew.-%) |
| 12 | 50,5 | 36 | -- | -- | 13,5 | 18 |
| 13 | 65 | -- | 14 | -- | 21 | 18 |
| 14 (Vergleich) | 72 | -- | -- | -- | 28 | 18 |
| 15 (Vergleich) | -- | -- | -- | 32,5 | 67,5 | 18 |

Tabelle 2:

| Prüfdaten der Formmassen | | | | | |
|---|---|---|---|---|---|
| Beispiele | $a_k^{RT}$ (kJ/m$^2$) | $a_k^{-40°C}$ (kJ/m$^2$) | $H_c$ (N/mm$^2$) | MVI (cm$^3$/10 min) | Glanz (Reflektometerwert) |
| 1 | 21,3 | 8,9 | 111 | 12,3 | 59 |
| 2 | 27,4 | 9,0 | 108 | 11,7 | 72 |
| 3 | 27,4 | 9,0 | 107 | 14,6 | 76 |
| 4 | 21,9 | 7,8 | 106 | 13,5 | 58 |
| 5 | 22,4 | 7,5 | 98 | 13,6 | 60 |
| 6 (Vergleich) | 6,7 | 6,4 | 110 | 8,5 | 92 |
| 7 (Vergleich) | 12,0 | 7,1 | 91 | 14,3 | 75 |
| 8 (Vergleich) | 10,0 | 7,7 | 110 | 10,4 | 20 |
| 9 (Vergleich) | 7,1 | 6,1 | 117 | 31,0 | 99 |
| 10 | 45,7 | 30,1 | 86 | 3,6 | 72 |
| 11 | 53,4 | 28,2 | 84 | 4,0 | 62 |
| 12 | 52,1 | 26,4 | 82 | 5,0 | 64 |
| 13 | 48,1 | 30,9 | 80 | 3,1 | 57 |
| 14 (Vergleich) | 24,9 | 14,2 | 88 | 4,0 | 73 |
| 15 (Vergleich) | 16,1 | 7,6 | 99 | 24,1 | 98 |

## Patentansprüche

1.  Pfropfpolymerisat-Formmassen vom ABS-Typ enthaltend

    A) 30 bis 80 Gew.-Teile, mindestens eines durch Lösungspolymerisation hergestellten Pfropfpolymerisats mit einem Kautschukgehalt von 20 bis 50 Gew.-%, und einem mittleren Teilchendurchmesser der Kautschukphase von 80 bis 600 nm,

    B) 5 bis 50 Gew.-Teile mindestens eines durch Masse-, Lösungs- oder Suspensionspolymerisation hergestellten ABS-Polymerisats mit einem Kautschukgehalt von 3 bis 18 Gew.-%, und einem mittleren Teilchendurchmesser der Kautschukphase von 700 bis 15 000 nm,
    und

C) 5 bis 70 Gew.-Teile mindestens eines durch Masse-, Lösungs- oder Suspensionspolymerisation hergestellten kautschukfreien aus Vinylmonomereinheiten aufgebauten Thermoplastharzes.

**2.** ABS-Formmassen gemäß Anspruch 1 enthaltend

A) 35 bis 75 Gew.-Teile mindestens eines durch Lösungspolymerisation hergestellten ABS-Polymerisats mit einem Kautschukgehalt von 22,5 bis 45 Gew.-% und einem mittleren Teilchendurchmesser der Kautschukphase von 150 bis 400 nm,

B) 7,5 bis 45 Gew.-Teile mindestens eines durch Masse-, Lösungs- oder Suspensionspolymerisation hergestellten ABS-Polymerisats mit einem Kautschukgehalt von 5 bis 16,5 Gew.-% und einem mittleren Teilchendurchmesser der Kautschukphase von 800 bis 10 000 nm
und

C) 7,5 bis 65 Gew.-Teile mindestens eines durch Masse-, Lösungs- oder Suspensionspolymerisation hergestellten kautschukfreien aus Vinylmonomereinheiten aufgebauten Thermoplastharzes.

**3.** ABS-Formmassen gemäß Anspruch 1 enthaltend

A) 40 bis 70 Gew.-Teile mindestens eines durch Lösungspolymerisation hergestellten ABS-Polymerisats mit einem Kautschukgehalt von 25 bis 40 Gew.-% und einem mittleren Teilchendurchmesser der Kautschukphase von 200 bis 350 nm,

B) 10 bis 40 Gew.-Teile mindestens eines durch Masse-, Lösungs- oder Suspensionspolymerisation hergestellten ABS-Polymerisats mit einem Kautschukgehalt von 7,5 bis 15 Gew.-% einem mittleren Teilchendurchmesser der Kautschukphase von 1000 bis 5 000 nm
und

C) 10 bis 60 Gew.-Teile mindestens eines durch Masse-, Lösungs- oder Suspensionspolymerisation hergestellten kautschukfreien aus Vinylmonomereinheiten aufgebauten Thermoplastharzes.

**4.** ABS-Formmassen gemäß den Ansprüchen 1 bis 3, wobei das Pfropfpolymerisat gemäß Komponente A) aus einem Monomerengemisch aus

D) 90 bis 20 Gew.-Teilen aromatischer Monoalkenylverbindung,

E) 10 bis 50 Gew.-Teilen ethylenisch ungesättigtes Nitril,

F) 0 bis 30 Gew.-Teilen weiterer copolymerisierbarer Verbindungen,

in Gegenwart von
15 bis 50 Gew.-Teilen pro 100 Gew.-Teile Monomere eines löslichen gelfreien Butadienpolymerisats oder Butadien/Styrol-Copolymerisats und in Gegenwart von
50 bis 200 Gew.-Teilen eines Lösungsmittels pro 100 Gew.-Teile Monomere D), E) und F) radikalisch polymerisiert, wobei das Lösungsmittel ein aliphatischer ($C_1$-$C_8$) oder cycloaliphatischer ($C_5$-$C_6$) Alkohol, Keton, Ether, Ester, Nitril (A1) oder ein Gemisch von (A1) mit einem aliphatischen ($C_4$-$C_{10}$) cycloaliphatischen oder aromatischen Kohlenwasserstoff (B2) im Gewichtsverhältnis A1:A2 von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so daß die isolierte thermoplastische Formmasse 20 bis 50 Gew.-% Butadienpolymerisat enthält.

**5.** ABS-Formmassen gemäß Ansprüchen 1 bis 4, **dadurch gekennzeichnet, daß** die Komponente (A) durch Lösungspolymerisation unter Verwendung von mindestens einem Lösungsmittel ausgewählt aus aliphatischem oder cycloaliphatischem $C_1$-$C_8$-Alkohol, Keton, Ether, Ester, Nitril bzw. einem Gemisch aus mindestens einem der genannten Lösungsmittel mit einem aliphatischen oder cycloaliphatischen $C_4$-$C_{10}$-Kohlenwasserstoff und/oder aromatischen Kohlenwasserstoff hergestellt wurde.

**6.** Verwendung der ABS-Formmassen gemäß Ansprüchen 1 bis 4 zur Herstellung von Formteilen.

**Claims**

1. Graft polymer moulding compositions of the ABS type, containing

    A) 30 to 80 parts by weight of at least one graft polymer which is produced by solution polymerisation and which has a rubber content of 20 to 50 % by weight and an average particle diameter of the rubber phase of 80 to 600 nm,

    B) 5 to 50 parts by weight of at least one ABS polymer produced by bulk, solution or suspension polymerisation, which has a rubber content of 3 to 18 % by weight and an average particle diameter of the rubber phase of 700 to 15,000 nm,
    and

    C) 5 to 70 parts by weight of at least one rubber-free thermoplastic resin synthesised from vinyl monomer units and produced by bulk, solution or suspension polymerisation.

2. ABS moulding compositions according to claim 1, containing

    A) 35 to 75 parts by weight of at least one ABS polymer which is produced by solution polymerisation and which has a rubber content of 22.5 to 45 % by weight and an average particle diameter of the rubber phase of 150 to 400 nm,

    B) 7.5 to 45 parts by weight of at least one ABS polymer produced by bulk, solution or suspension polymerisation, which has a rubber content of 5 to 16.5 % by weight and an average particle diameter of the rubber phase of 800 to 10,000 nm,
    and

    C) 7.5 to 65 parts by weight of at least one rubber-free thermoplastic resin synthesised from vinyl monomer units and produced by bulk, solution or suspension polymerisation.

3. ABS moulding compositions according to claim 1, containing

    A) 40 to 70 parts by weight of at least one ABS polymer which is produced by solution polymerisation and which has a rubber content of 25 to 40 % by weight and an average particle diameter of the rubber phase of 200 to 350 nm,

    B) 10 to 40 parts by weight of at least one ABS polymer produced by bulk, solution or suspension polymerisation, which has a rubber content of 7.5 to 15 % by weight and an average particle diameter of the rubber phase of 1,000 to 5,000 nm,
    and

    C) 10 to 60 parts by weight of at least one rubber-free thermoplastic resin synthesised from vinyl monomer units and produced by bulk, solution or suspension polymerisation.

4. ABS moulding compositions according to claims 1 to 3, wherein the graft polymer corresponding to component A) is polymerised by a radical mechanism from a monomer mixture comprising

    D) 90 to 20 parts by weight of an aromatic monoalkenyl compound,

    E) 10 to 50 parts by weight of an ethylenically unsaturated nitrile,

    F) 0 to 30 parts by weight of further copolymerisable compounds,

    in the presence of
    15 to 50 parts by weight per 100 parts by weight of monomer of a soluble, gel-free butadiene polymer or butadiene/styrene copolymer, and in the presence of
    50 to 200 parts by weight of a solvent per 100 parts by weight of monomers D), E) and F),
    wherein the solvent is an aliphatic ($C_1$-$C_8$) or cycloaliphatic ($C_5$-$C_6$) alcohol, ketone, ether, ester, nitrile (A1) or a mixture of (A1) with an aliphatic ($C_4$-$C_{10}$), cycloaliphatic or aromatic hydrocarbon (B2) in a ratio by weight of A1: A2 from 100:0 to 30:70, and the polymerisation is conducted as far as a polymer content of the total mixture of 30 to 70 % by weight, with thorough mixing and optionally with the subsequent addition of regulators and initiator, so that the isolated thermoplastic moulding composition contains 20 to 50 % by weight of butadiene polymer.

5. ABS moulding compositions according to claims 1 to 4, **characterised in that** component (A) was produced by solution polymerisation using at least one solvent selected from an aliphatic or cycloaliphatic $C_1$-$C_8$ alcohol, ketone, ether, ester, nitrile, or a mixture of at least one of said solvents with an aliphatic or cycloaliphatic $C_4$-$C_{10}$ hydrocarbon and/or aromatic hydrocarbon.

6. The use of the ABS moulding compositions according to claims 1 to 4 for the production of mouldings.


**Revendications**

1. Matières à mouler en polymère greffé de type ABS, contenant :

   A) 30 à 80 parties en poids, d'au moins un polymère greffé préparé par polymérisation en solution avec une teneur en caoutchouc allant de 20 à 50% en poids, et un diamètre moyen des particules de la phase caoutchouc allant de 80 à 600 nm,
   b) 5 à 50 parties en poids d'au moins un polymère ABS préparé par polymérisation en masse, en solution ou en suspension, avec une teneur en caoutchouc allant de 3 à 18% en poids, et un diamètre moyen des particules de la phase caoutchouc allant de 700 à 15 000 nm, et
   C) 5 à 70 parties en poids d'au moins une résine thermoplastique constituée d'unités monomères vinyliques, exempte de caoutchouc, préparée par polymérisation en masse, en solution ou en suspension.

2. Matières à mouler en ABS suivant la revendication 1, contenant :

   A) 35 à 75 parties en poids, d'au moins un polymère ABS préparé par polymérisation en solution avec une teneur en caoutchouc allant de 22,5 à 45% en poids, et un diamètre moyen des particules de la phase caoutchouc allant de 150 à 400 nm,
   b) 7,5 à 45 parties en poids d'au moins un polymère ABS préparé par polymérisation en masse, en solution ou en suspension, avec une teneur en caoutchouc allant de 5 à 16,5% en poids, et un diamètre moyen des particules de la phase caoutchouc allant de 800 à 10 000 nm, et
   C) 7,5 à 65 parties en poids d'au moins une résine thermoplastique constituée d'unités monomères vinyliques, exempte de caoutchouc, préparée par polymérisation en masse, en solution ou en suspension.

3. Matières à mouler en ABS suivant la revendication 1, contenant :

   A) 40 à 70 parties en poids, d'au moins un polymère ABS préparé par polymérisation en solution avec une teneur en caoutchouc allant de 25 à 40% en poids, et un diamètre moyen des particules de la phase caoutchouc allant de 200 à 350 nm,
   b) 10 à 40 parties en poids d'au moins un polymère ABS préparé par polymérisation en masse, en solution ou en suspension, avec une teneur en caoutchouc allant de 7,5 à 15% en poids, et un diamètre moyen des particules de la phase caoutchouc allant de 1000 à 5000 nm, et
   C) 10 à 60 parties en poids d'au moins une résine thermoplastique constituée d'unités monomères vinyliques, exempte de caoutchouc, préparée par polymérisation en masse, en solution ou en suspension.

4. Matières à mouler ABS suivant les revendications 1 à 3, où le polymère greffé suivant le composant A) est polymérisé de manière radicalaire, à partir d'un mélange de monomères, constitué de :

   D) 90 à 20 parties en poids de composé monoalcényle aromatique ;
   E) 10 à 50 parties en poids de nitrile éthyléniquement insaturé, et
   F) 0 à 30 parties en poids d'autres composés copolymérisables,

   en présence de 15 à 50 parties en poids par 100 parties en poids de monomère, d'un polymère de butadiène ou d'un copolymère butadiène/styrène soluble, exempt de gel, et en présence de
   50 à 200 parties en poids d'un solvant, par 100 parties en poids des monomères D), E) et F),

où le solvant est un alcool aliphatique ($C_1$-$C_8$) ou cycloaliphatique ($C_5$-$C_6$), une cétone, un éther, un ester, un nitrile (A1) ou un mélange de (A1) avec un hydrocarbure aliphatique ($C_4$-$C_{10}$), cycloaliphatique ou aromatique (B2) en un rapport pondéral A1:B2 allant de 100:0 à 30:70, et la polymérisation est réalisée jusqu'à une teneur en polymère du mélange total allant de 30 à 70% en poids par mélange et le cas échéant, addition dosée d'un régulateur et d'un initiateur, de sorte que la matière à mouler thermoplastique isolée contienne 20 à 50% en poids de polymère butadiène.

5. Matières à mouler ABS suivant les revendications 1 à 4, **caractérisées en ce que** le composant (A) est préparé par polymérisation en solution en utilisant au moins un solvant choisi parmi les alcools en $C_1$-$C_8$ aliphatiques ou cycloaliphatiques, les cétones, les éthers, les esters, les nitriles ou un mélange d'au moins l'un des solvants indiqués avec un hydrocarbure en $C_4$-$C_{10}$ aliphatique, cycloaliphatique et/ou un hydrocarbure aromatique.

6. Utilisation des matières à mouler ABS suivant les revendications 1 à 4, pour préparer des articles moulés.